Europäisches Patentamt

European Patent Office

Office européen des brevets

(19)

(11) EP 1 076 228 A1

(12) **EUROPEAN PATENT APPLICATION**

(43) Date of publication:
**14.02.2001 Bulletin 2001/07**

(51) Int Cl.$^7$: **G01G 3/16**

(21) Application number: **99202197.2**

(22) Date of filing: **06.07.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant: **NEDERLANDSE ORGANISATIE VOOR TOEGEPAST-NATUURWETENSCHAPPELIJK ONDERZOEK TNO**
**2628 VK Delft (NL)**

(72) Inventor: **The designation of the inventor has not yet been filed**

(74) Representative: **Ottevangers, Sietse Ulbe et al Vereenigde,**
**Postbus 87930**
**2508 DH Den Haag (NL)**

(54) **A method and an apparatus for directly measuring the mass of an object**

(57) A method for directly measuring the mass of an object comprising the steps of: a) exciting the object with a vibration by applying a non-constant but known force which changes as a function of time, said changing force being applied with a certain frequency; b) measuring the accelerations of the said object which are the results of the said non-constant force-application of step a) and obtaining a plurality of acceleration-measurements; and c) selecting from said plurality of acceleration-measurements the acceleration-component having the said certain frequency and deriving the mass of the said object.
An apparatus for carrying out the said method.

EP 1 076 228 A1

## Description

The present invention relates to a method and an apparatus for directly measuring the mass of an object. Such an object for example could be an object that is weighted while it is moved by a robot from one place to another, or an object suspending in the hook of a hoisting element. Another example of such an object is a material being present in a container, such as the grab of a crane which is applied in transfer of dry bulk goods in a harbour. Examples of such bulk goods are, iron core, scrap, agribulk, coal, mineral products, fertilizer base materials and the like.

It is a requirement in transfer of material from a container that the amounts of transferred product are determined very carefully in view of settlement purposes. Also for planning purposes in transfer of material from a container (e.g. use of number of people and equipment) it is desirable that at each moment in time the amounts of transferred product are known.

It is an object of the present invention to provide a method for measuring the mass of an object which gives accurate results and actual information on each moment of time.

The invention therefore provides a method for directly measuring the mass of an object comprising the steps of a) exciting the said object with a vibration by applying a non-constant but known force which changes as a function of time, said changing force being applied with a certain frequency; b) measuring the accelerations of the said object which are the results of the said non-constant force-application of step a) and obtaining a plurality of acceleration-measurements; and c) selecting from said plurality of acceleration-measurements the acceleration-component having the said certain frequency and deriving the mass of the said object.

The method of the invention is substantially based upon the use of the well-known force law: F = m. a. wherein F is the force applied on a certain quantity of matter, m is the mass of said matter and a is the acceleration resulting from the applied force.

In a direct measurement of mass the force and the acceleration are measured and the mass is determined as the quotient of these quantities.

In particular, according to the invention, force and acceleration can be considered as a function of frequency, if a changing force having a certain frequency is applied. If no other forces having this frequency are effective, then the acceleration-component having this frequency is merely caused by the force of this frequency. From acceleration-measurements the said acceleration-component is to be selected e.g. by (analogue or digital) filtering and subsequently the mass can be determined. In this manner a measurement can be carried out over a certain time period and has the advantage that its accuracy is enhanced because statistical errors are averaged.

The invention further provides an apparatus for carrying out the said method for directly measuring the mass of an object, comprising means for exciting the object with a vibration by applying a non-constant force which changes as a function of time, said changing force being applied with a certain frequency; means for measuring the accelerations of the said object which are the results of the said non-constant force-application and means for obtaining a plurality of acceleration-measurements; and means for selecting from said plurality of acceleration-measurements the acceleration-component having the same certain frequency and deriving the mass of the said mass of the said object.

The invention will now be described in more detail by way of example by reference to the accompanying drawings, in which

fig. 1 represents the vertical displacement of an object as a result of the changing force applied according to an advantageous embodiment of the invention; and
fig. 2 represents the acceleration of the said object as a result of the changing force applied according to an advantageous embodiment of the invention.

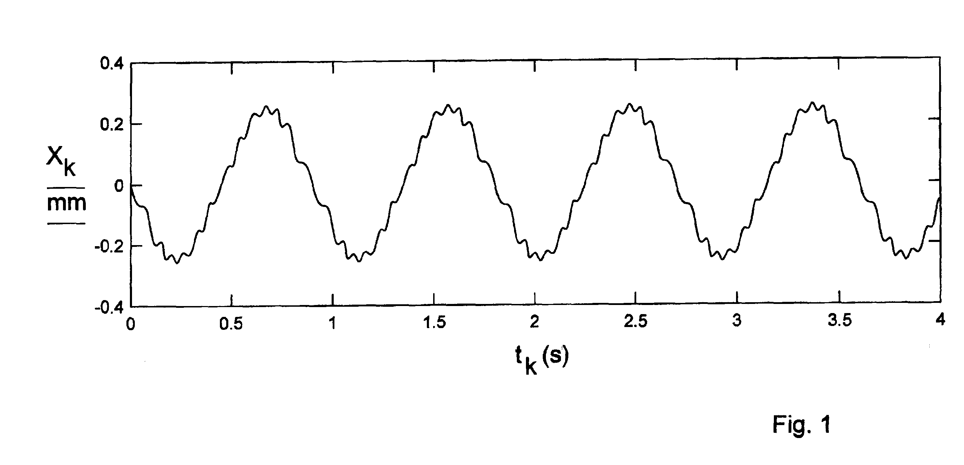

Referring now to fig. 1 it is shown that the applied vibrations in fact are superposed on the "normal" accelerations of the object such as gravity and accelerations which are a result of the hoisting process itself and in fig. 1 the vertical displacement (vertical axis) (in mm) is represented as a function of time (horizontal axis) (in seconds).

On the sine-shaped vibration which is related to the natural frequency of the equipment a higher frequency vibration is superposed, which is the result of the excitation applied according to the invention.

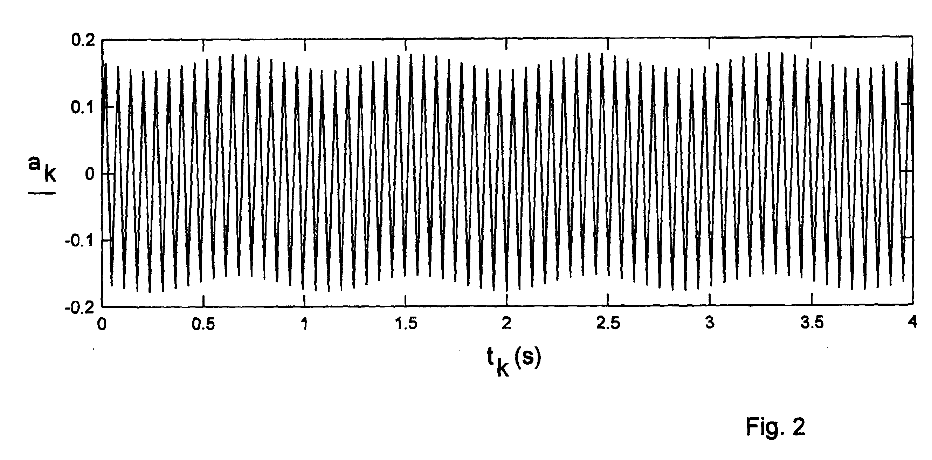

In fig. 2 the acceleration (which is the second derivative of the position signal) has been represented. It is appreciated that the high-frequency excitation is shown clearly.

The horizontal axis of fig. 2 represents time (in seconds) whereas the vertical axis represents the grab acceleration (in mm/s$^2$). By application of any filter suitable for the purpose the signal of interest having the correct frequency can be measured.

It is an advantage of the method according to the invention that it is not necessary to measure the force at a plurality of locations.

Advantageously, the mass of the object is determined by the following steps: d) exciting the object with a vibration by applying a non-constant force which changes as a function of time, said changing force being applied with the said predetermined frequency; e) measuring the accelerations of the object which are the results of the said non-constant force-application of step d) and obtaining a plurality of acceleration-measurements; and f) selecting from said plurality of acceleration-measurements the acceleration-component having the said predetermined frequency and deriving the mass of the said empty container.

In case of an object being present in a container, the mass m of interest is derived as follows from the plurality of acceleration-measurements:

$$m = m1 - m2 = F1_n/a1_n - F2_n/a2_n$$

wherein m1 is the mass of the filled container, m2 is the mass of the empty container, $F1_n$ is the force applied with a frequency of n Hz (wherein n > 0) for the filled container, $F2_n$ is the force applied with a frequency of n Hz for the empty container and $a1_n$ and $a2_n$ are the acceleration-components in the direction of the force and having the same frequency of n Hz for the filled container and the empty container respectively. Since $F1_n$, $F2_n$ are known and $a1_n$, $a2_n$ are selected from the plurality of acceleration-measurements, m1 and m2 and in this manner m can be determined. When the object is not present in a container, the mass m of the object can be calculated in an analogue way from $m = F_n/a_n$, as will be clear to those skilled in the art.

The excitation of the object with a vibration is generated by an actuator. Such an actuator comprises advantageously a rotating mass having an excentric gravity centre is connected to the container and excites the container. More advantageously two such masses are applied in anti-phase to generate a force in one direction.

It will be appreciated by those skilled in the art that any suitable actuators such as electromagnetic actuators, piezo-material based actuators and the like could be used. The actuator has to be coupled to the object with some bias, such a bias for example can be caused by the weight of the object itself. In case of measurement of the mass of an object in a container, the actuator is advantageously part of the container itself. After having applied the changing force it is only needed to measure the object response with a suitable sensor and to filter the acceleration-component from it, which has the same frequency as the force applied.

The sensor should be sensitive due to the small accelerations of the object. Advantageously e.g. a geophone is used. The sensor advantageously could be located within the housing of the actuator. However, other more suitable positions near the object or on the container may be used. There is no need for signal processing near the object or on the container itself, the signals obtained e.g. can be transmitted wireless to a receiver that is located near a computer for carrying out the calculations, which computer is at any suitable location.

However, it will be appreciated by those skilled in the art that any location near the object or on the container suitable for the purpose could be used.

Further, it will be appreciated by those skilled in the art that any excitation suitable for the purpose can be applied, e.g. striking the object with a hammer, which generates a jump excitation, which can be considered as a sum of a plurality of sine-shaped wave forms.

It will be appreciated that various modifications of the present invention will be apparent to those skilled in the art from the foregoing description. Such modifications are intended to fall within the scope of the appended claims.

## Claims

1. A method for directly measuring the mass of an object comprising the steps of:

   a) exciting the said object with a vibration by applying a non-constant but known force which changes as a function of time, said changing force being applied with a certain frequency;
   b) measuring the accelerations of the said object which are the results of the said non-constant force-application of step a) and obtaining a plurality of acceleration-measurements; and
   c) selecting from said plurality of acceleration-measurements the acceleration-component having the said certain frequency and deriving the mass of the said object.

2. The method as claimed in claim 1 wherein the said mass is contained in a container.

3. The method as claimed in claims 1 or 2, wherein the said container is the grab of a crane applied in transfer of dry bulk goods.

4. The method as claimed in any one of claims 1-3, wherein the said non-constant force has a sine-shape.

5. The method as claimed in any one of claims 1-4 that in step c) the acceleration-component having said certain frequency is selected by filtering.

6. The method as claimed in claim 5, wherein said filtering is an analogue or digital filtering.

7. The method as claimed in any one of claims 1-6 wherein the said plurality of accelerations is measured by a sensor.

8. The method as claimed in any one of claims 1-7 wherein in step a) an actuator is applied for exciting the said object.

9. The method as claimed in claim 8 wherein the said actuator comprises at least a mass rotating around an axis, the gravity centre of said mass being eccentric.

**10.** The method as claimed in claims 8 or 9 wherein two rotating masses in anti-phase are applied.

**11.** The method as claimed in claim 8 wherein the actuator is an electromagnetic actuator.

**12.** The method as claimed in claim 8 wherein the actuator comprises a piezoelectric element.

**13.** The method as claimed in claim 7 wherein the sensor is housed in the housing of the actuator.

**14.** The method as claimed in claim 7 wherein the said sensor is housed in a container.

**15.** The method as claimed in any one of claims 2-14, wherein the mass of the container, when empty, is determined by the following steps:

> d) exciting the said empty container with a vibration by applying a non-constant but known force which changes as a function of time, said changing force being applied with the said certain frequency;
> e) measuring the accelerations of the said empty container which are the results of the said non-constant force-application of step d) and obtaining a plurality of acceleration-measurements; and
> f) selecting from said plurality of acceleration-measurements the acceleration-component having the said certain frequency and deriving the mass of the said empty container.

**16.** An apparatus for carrying out the method as claimed in any one of claims 1-15, comprising:

> means for exciting the object with a vibration by applying a non-constant but known force which changes as a function of time, said changing force being applied with a certain frequency;
> means for measuring the accelerations of the said object which are the results of the said non-constant force-application and means for obtaining a plurality of acceleration-measurements; and
> means for selecting from said plurality of acceleration-measurements the acceleration-component having the same certain frequency and deriving the mass of the said object.

Fig. 1

EP 1 076 228 A1

Fig. 2

**European Patent Office**

## EUROPEAN SEARCH REPORT

Application Number

EP 99 20 2197

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| A | EP 0 674 158 A (KITO ENGINEERING 1992 LTD) 27 September 1995 (1995-09-27) * abstract * --- | 1 | G01G3/16 |
| A | EP 0 003 473 A (WIRTH GALLO & CO) 22 August 1979 (1979-08-22) * page 6, last paragraph - page 7, paragraph 5; figure 9 * --- | 1 | |
| A | PATENT ABSTRACTS OF JAPAN vol. 1998, no. 02, 30 January 1998 (1998-01-30) & JP 09 272669 A (HITACHI BUILDING SYST CO LTD), 21 October 1997 (1997-10-21) * abstract * ----- | 1 | |
| | | | TECHNICAL FIELDS SEARCHED (Int.Cl.7) |
| | | | G01G |

The present search report has been drawn up for all claims

| Place of search | Date of completion of the search | Examiner |
|---|---|---|
| THE HAGUE | 23 November 1999 | Ganci, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 99 20 2197

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-1999

| Patent document cited in search report | | Publication date | Patent family member(s) | | Publication date |
|---|---|---|---|---|---|
| EP 0674158 | A | 27-09-1995 | JP | 8043185 A | 16-02-1996 |
| EP 0003473 | A | 22-08-1979 | CH | 623928 A | 30-06-1981 |
| | | | AR | 215983 A | 15-11-1979 |
| | | | AU | 518372 B | 24-09-1981 |
| | | | AU | 4312779 A | 09-08-1979 |
| | | | BE | 61 T | 25-04-1980 |
| | | | BR | 7900581 A | 28-08-1979 |
| | | | CA | 1114845 A | 22-12-1981 |
| | | | DE | 2857524 A | 31-07-1980 |
| | | | ES | 477329 A | 01-07-1979 |
| | | | FR | 2454610 A | 14-11-1980 |
| | | | GB | 2057701 A | 01-04-1981 |
| | | | IT | 1148231 B | 26-11-1986 |
| | | | JP | 54111861 A | 01-09-1979 |
| | | | MX | 147109 A | 06-10-1982 |
| | | | NL | 7815061 A | 30-05-1980 |
| | | | NL | 7815061 T | 30-05-1980 |
| | | | SE | 8002840 A | 16-04-1980 |
| | | | US | 4240289 A | 23-12-1980 |
| | | | ZA | 7807206 A | 27-12-1979 |
| JP 09272669 | A | 21-10-1997 | NONE | | |

EPO FORM P0459

For more details about this annex : see Official Journal of the European Patent Office, No. 12/82